# FASCICULE DE BREVET EUROPEEN

(11) **EP 0 437 413 B1**
(45) Date de publication et mention de la délivrance du brevet: **13.07.1994**
(21) Numéro de dépôt: 91440001.5
(22) Date de dépôt: 09.01.1991
(51) Int. Cl.: B60P 3/075

(54) **Structure unitaire déplaçable de calage ou de soutien d'un véhicule routier par ses roues**
Verschiebbare einheitliche Struktur zur Befestigung oder zum Unterstützen von Fahrzeugrädern
Removable unitary structure for securing and supporting a road vehicle by its wheels

(30) Priorité: 09.01.1990 FR 9000309
(43) Date de publication de la demande: 17.07.1991
(73) Titulaire: LOHR INDUSTRIE S.A., F-67980 Hangenbieten (FR)
(72) Inventeur: Saulnier, André, F-67200 Strasbourg (FR)
(74) Mandataire: Metz, Paul

(56) Documents cités:
- EP-A- 0 272 192
- EP-A- 0 277 896
- EP-A- 0 284 532
- FR-A- 2 419 198

## Description

La présente invention se rapporte à une structure unitaire déplaçable de calage ou de soutien d'un véhicule routier par ses roues.

Les diverses cales pivotantes existantes comportent un bras pivotant immobilisable par un dispositif mécanique à un emplacement déterminé après rotation d'une amplitude angulaire autour d'un axe de pivotement.

Une structure selon les caractéristiques du préambule de la revendication 1 est par exemple représentée par EP-A-0 284 532.

Ce dispositif mécanique fonctionne par verrouillage manuel, encliquetage ou autre mécanisme de blocage ou de verrouillage dans une position angulaire prédéterminée.

Ce blocage angulaire associé à un déplacement d'ajustement sur ou le long d'une structure adjacente linéaire servant de support permet de constituer une zone de blocage en un endroit quelconque d'un plan-support d'un véhicule.

Dans le cas de véhicules porte-voitures, le personnel affecté au chargement et au déchargement des voitures est amené à manipuler fréquemment les cales d'immobilisation.

Les qualités principales souhaitées pour celles-ci concernent la facilité et la rapidité de mise en oeuvre, l'efficacité et le rendement technico-économique.

Or, les cales pivotantes conventionnelles sont difficiles à mettre en place en raison du déplacement d'ensemble nécessaire et de leur montage répété sur le support adjacent.

De plus, leur mise en oeuvre s'avère peu commode de par leur poids, leur encombrement et la nécessité d'une manipulation importante.

La structure pivotante selon la présente invention remédie à tous les inconvénients des ensembles antérieurs et présente en outre de nombreux avantages.

A cet effet, la structure pivotante se montre remarquable en ce qu'elle se compose d'un bras pivotant articulé sur un axe vertical sur une embase mobile portée à coulissement par un support rectiligne, ledit bras pivotant étant relié mécaniquement à un mécanisme de verrouillage-déverrouillage en position angulaire par appui de coincement d'un patin sur la face adjacente du support rectiligne à travers une pièce mobile transversalement sous l'action conjointe d'un ressort d'armement, d'une pédale de commande et du mouvement angulaire du bras.

Les nombreux avantages que laisse apparaître la structure pivotante selon l'invention sont consignés pour la plupart ci-après :
. grande souplesse d'utilisation
. maniabilité importante
. multiplicité d'usages et d'applications d'une part en cale et d'autre part en bras de soutien, par exemple d'un véhicule par ses roues
. structure déplaçable facilement et rapidement le long du support rectiligne porteur adjacent
. commande au pied laissant l'entier usage des mains pour un autre travail
. verrouillage possible en position rabattue
. la cale reste attachée à son profilé porteur, évitant ainsi les pertes
. le profilé porteur est de section simple, facile à trouver dans le commerce et bon marché
. on peut régler la pression de coincement
. cale unique droite/gauche
. augmentation de la force de coincement, c'est-à-dire du maintien en position de la cale par la poussée du véhicule
. sécurité positive : le déverrouillage s'effectue par une manoeuvre spéciale sur la pédale.

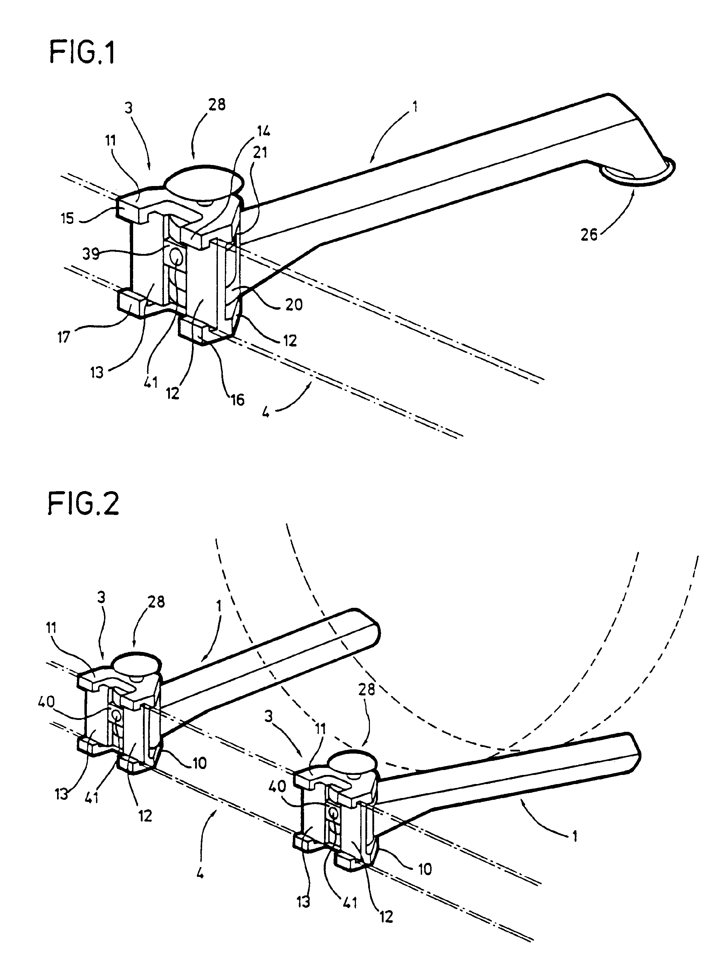

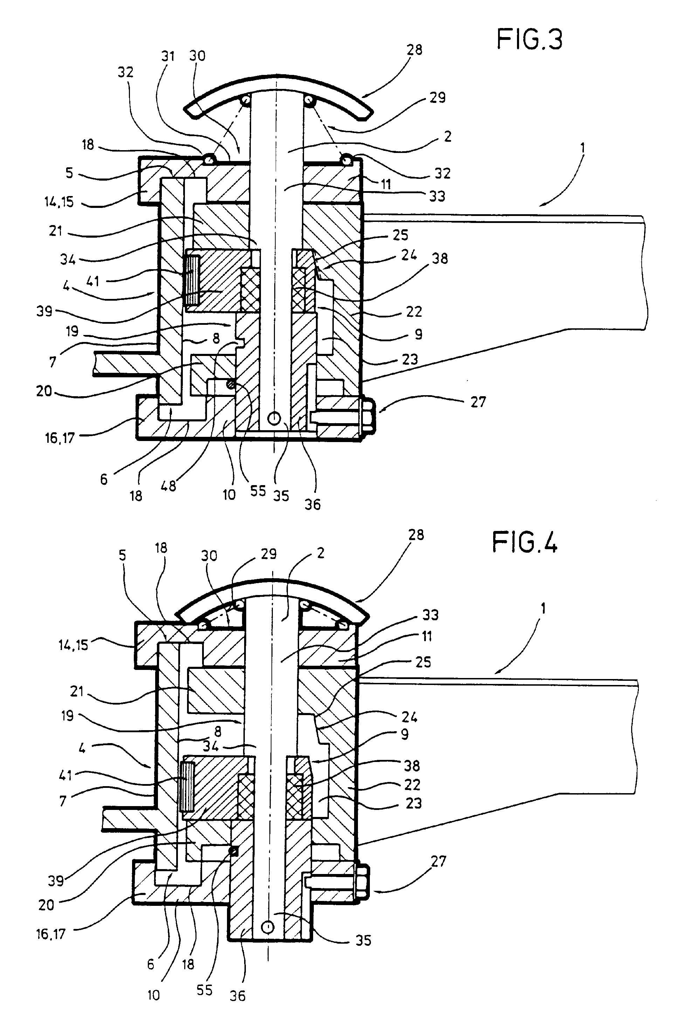

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en perspective d'une structure unitaire déplaçable selon l'invention, accrochée à coulissement sur un profilé porteur selon une version de calage ;
. la figure 2 est une vue en perspective d'un couple de structure unitaire déplaçable selon l'invention, selon une version de soutien d'une roue ;
. la figure 3 est une vue en coupe longitudinale en position verrouillée ;
. la figure 4 est une vue en coupe longitudinale en position déverrouillée ;
. les figures de 5 à 9 sont des coupes transversales successives montrant les positions caractéristiques de l'axe du ressort d'armement dans les cas suivants :
   - figure 5 : position initiale rabattue verrouillée contre le profilé porteur, pièce d'armement en haut ,
   - figure 6 : position suivante rabattue non verrouillée contre le profilé porteur, pièce d'armement en bas après appui de déverrouillage sur la pédale ,
   - figure 7 : position de début d'armement pièce d'armenent en bas ,
   - figure 8 : position de blocage pièce d'armement en haut ,
   - figure 9 : position angulaire identique à la précédente, après appui de déverrouillage sur la pédale, pièce d'armement en bas ,
. la figure 10 est une vue en coupe transversale avant blocage par coincement montrant les surfaces de poussée;
. la figure 11 est une vue en coupe transversale identique à la figure 10 en position de blocage coincement ;
. la figure 12 est une vue d'ensemble de dessus, illustrative d'un exemple d'utilisation en soutien ou en mode de calage par les seules roues avant ;
. la figure 13 est une vue de dessus illustrative d'un exemple d'utilisation en calage ;
. la figure 14 est une vue schématique en plan montrant les différentes positions caractéristiques du bras pivotant : rabattue, en zone d'armement, et en zone de blocage, de part et d'autre du plan de symétrie.

La structure porteuse pivotante selon la présente invention procède de l'idée générale inventive qui consiste à commander le déverrouillage du pivotement par une pédale, à armer le verrouillage par le mouvement du bras et à bloquer le long d'un support rectiligne porteur le corps portant l'axe de pivotement par un appui de coincement d'un patin sur la surface en regard à la manière d'un frein, appui commandé par le mouvement de rotation du bras pivotant.

Une autre originalité concerne la double application possible pour cette structure pivotante d'une part en cale pivotante et d'autre part en bras porteur ou de soutien d'un véhicule routier par les roues.

On décrira tout d'abord ci-après la structure pivotante selon l'invention par ses moyens généraux en référence aux figures de 1 à 4.

La structure pivotante selon l'invention comporte de façon générale un bras pivotant 1 articulé à son extrémité arrière sur un axe de pivotement 2 porté par une embase ou un corps 3 monté déplaçable le long d'un support rectiligne ou profilé porteur 4. Dans le mode de réalisation représenté, le profilé est de section simple, facile à trouver dans le commerce, par exemple du type fer plat à chants latéraux 5 et 6 et à grandes faces externe 7 et interne 8.

Le corps 3 est immobilisable sur le support rectiligne 4 en même temps que le blocage du bras par l'action d'un mécanisme de verrouillage-déverrouillage 9 dans une position angulaire prédéterminée par le mouvement angulaire du bras pivotant.

Plus précisément, dans le mode de réalisation représenté, le corps est formé d'une chape inférieure 10 et d'une chape supérieure 11 reliées entre elles en regard de la face interne 8 du profilé porteur 4 par deux platines 12 et 13 laissant entrevoir entre elles une pièce de blocage dont il sera question ci-après.

Les chapes 10 et 11 sont prolongées chacune vers le profilé porteur par deux pattes d'accrochage 14, 15 et 16, 17 délimitant chacune une gorge telle que 18 adaptée à la forme des chants du profilé porteur 4 et venant ainsi y prendre appui à coulissement, constituant ainsi un chariot se déplaçant en translation le long du profilé porteur. L'embase ou le corps 3 est accrochée sur le profilé porteur par ces pattes et y est maintenue stable en déplacement par l'engagement de chaque couple de gorges 18 sur chaque chant latéral, 5 ou 6, correspondant.

Le bras pivotant 1 est constitué, par exemple, d'un simple tronçon rectiligne marqué d'aspérités ou d'un relief antidérapant. Son extrémité arrière est articulée au corps 3 et conformée selon une mâchoire 19 formée de deux flasques, inférieur 20 et supérieur 21, pourvus chacun d'une ouverture centrale à travers chacune desquelles passe l'axe de pivotement 2 pour former ainsi un palier double par lequel l'axe porte le bras pivotant.

Les flasques 20 et 21 sont réunis mécaniquement entre eux au niveau de la jonction avec le bras pivotant 1 et forment une pièce d'extrémité 22 de profil transversal général en U couché. La partie en retrait de la face ouverte de cette pièce d'extrémité présente un relief d'encastrement formé d'une cavité ouverte semi-cylindrique 23 en décrochement d'évidement suivi vers le haut par une rampe conique 24 de dégagement.

Celle-ci est prolongée vers l'avant par un plan de poussée 25 convenablement orienté agissant sur une pièce de blocage dont il sera question ci-après.

L'extrémité opposée du bras est libre dans le cas d'une application en bras porteur ou de soutien (figure 2) ou équipée d'un patin d'appui 26 en contact avec le plan porteur dans le cas d'une application en cale (figure 1) permettant ainsi de soulager totalement l'emprise mécanique de l'embase 3 sur le profilé porteur 4 lors de la force d'appui de la roue.

Le bras pivotant 1 se déplace angulairement autour de l'axe de pivotement 2 qu'il utilise comme palier par l'intermédiaire des ouvertures des flasques 20 et 21. Cet axe est rendu immobile en rotation par l'intermédiaire d'un blocage quelconque, par exemple à l'aide d'une vis 27. Il reste par contre mobile en translation, de haut en bas et inversement, perpendiculairement au bras et à son plan de débattement angulaire comme le montre la lumière située de part et d'autre de cette vis.

L'axe de pivotement 2 est pourvu vers le haut d'une pièce terminale de forme générale en champignon constituant une surface d'appui destinée à recevoir une pression d'actionnement verticale par le pied. Cette pièce terminale sera par conséquent appelée ci-après pédale 28.

L'axe de pivotement 2 est monté en rappel élastique axial vers le haut par un ressort de rappel 29 concentrique à l'axe, logé sous la pièce terminale, dans le volume délimité entre sa sous-face arrière et une surface en regard 30 de la chape supérieure 11 qui présente à cet endroit une légère cavité 31 délimitée par une bordure 32 destinée à recevoir la base du ressort concentrique de rappel 29.

Sur les figures 3 et 4, on peut voir que l'axe de pivotement 2 est formé de deux pièces distinctes : une pièce principale 33 présentant un épaulement circulaire de rétrécissement 34 à environ mi-longueur pour se terminer par une partie cylindrique 35 de plus faible diamètre qui porte une pièce d'armement 36 rapportée en extrémité et solidaire de cet axe.

Bien entendu, cette structure en deux pièces peut être réalisée monobloc en fonction des facilités d'usinage.

La pièce d'armement 36, le ressort concentrique de rappel 29 de l'axe et un ressort d'armement décrit ci-après forment un dispositif d'armement-déclenchement 37 du verrouillage-blocage commandé par le ressort d'armement et bras comme on le verra ci-après.

L'espace technique situé entre l'épaulement circulaire de rétrécissement 34 et le haut de la pièce 35 forme un maneton sur lequel est montée, par l'intermédiaire d'une bague déplaçable déformable 38, une pièce mobile de blocage 39 constituant, avec l'extrémité arrière du bras et l'axe de pivotement, le mécanisme de verrouillage-déverrouillage 9.

Cette pièce de blocage 39 est mobile axialement de bas en haut et inversement avec l'axe de pivotement 2 qui la porte.

La pièce mobile de blocage 39 comporte, à son extrémité avant, une paroi frontale 40 garnie d'un patin d'appui et de blocage 41 contre la face interne 8 du profilé porteur. Elle présente une paroi arrière 42 dont la partie supérieure est conformée de façon adaptée pour permettre, à partir du mouvement angulaire de blocage du bras, un mouvement transversal de la pièce 39 forçant en blocage de coincement le patin 41 contre la face interne 8 du profilé porteur 4.

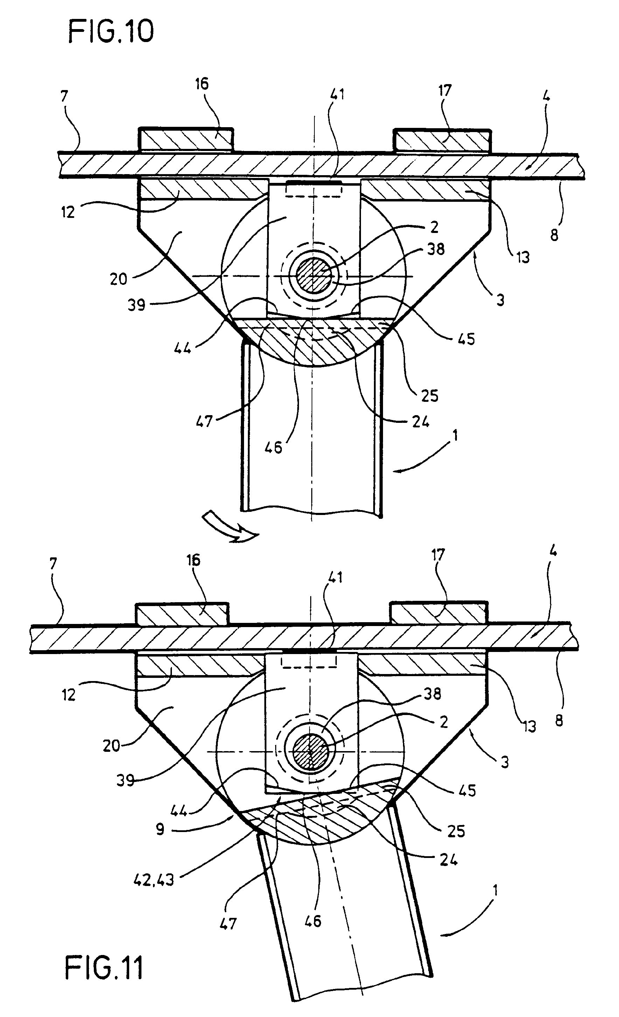

Les formes suivantes, celle de la rampe de dégagement, de la paroi arrière 42 et celle de l'extrémité du bras ainsi que les déviations angulaires corrélatives sont représentées plus particulièrement sur les figures 3,4,10 et 11.

Il s'agit plus particulièrement, en ce qui concerne la forme de la partie supérieure de la paroi arrière 42, d'un front de poussée composite 43 à deux biseaux symétriques 44 et 45 séparés par un méplat 46 venant en contact de poussée avec un front plan de poussée 47 constituant le plan de bordure de la cavité supérieure 24 du relief d'encastrement dont le rôle est celui de rampe de dégagement à la paroi arrière de la pièce mobile de blocage 39.

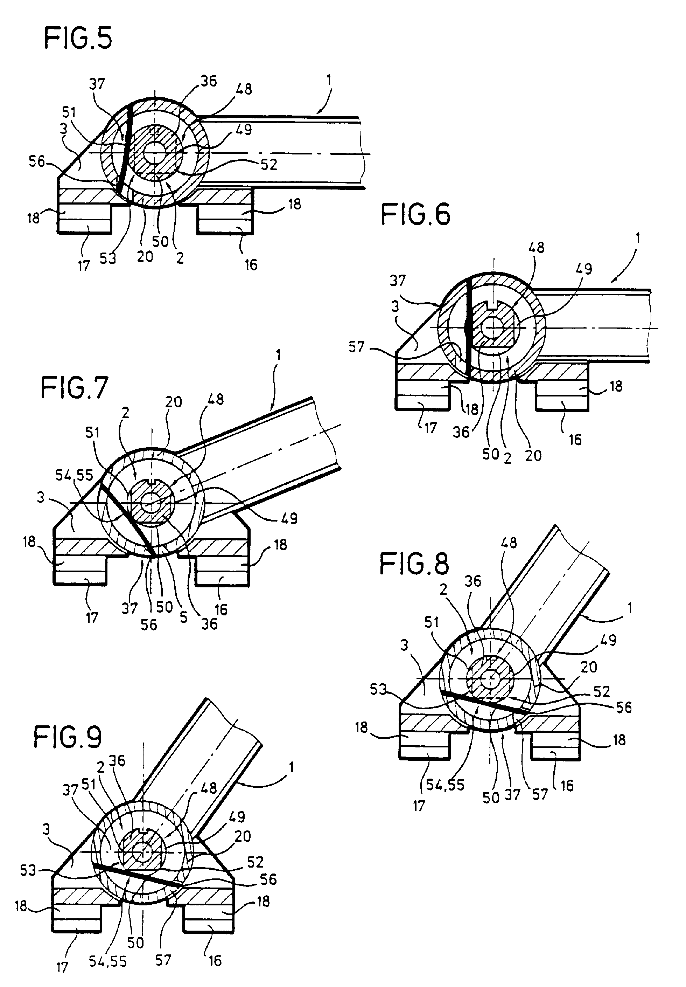

On distingue clairement sur la figure 9 les surfaces symétriques en contact qui procurent deux positions de blocage symétriques par rapport à la position perpendiculaire du bras de la figure 8.

La pièce d'armement 36 présente dans un plan transversal une came en creux 48 formée d'une succession de rainures ou de gorges, par exemple de trois gorges 49, 50 et 51 dans la surface latérale cylindrique de la pièce d'armement 36, dont les plans de fond sont, par exemple, perpendiculaires deux à deux.

Ces gorges adjacentes ne se rejoignent pas et laissent chacune entre elles des portions de raccordement telles que 52, 53 de surface latérale cylindrique en coin sortant arrondi plus ou moins étendu en fonction de leur disposition, de leur longueur et profondeur (figures de 5 à 9).

Ces gorges sont utilisées pour le logement temporaire d'une pièce d'encliquetage ou d'une partie de celle-ci par exemple un ressort d'armement 54 par son corps ou son extrémité qui affecte la forme d'une tige ou d'une lame 55.

La tige ou la lame 55 est disposée au droit des gorges ou rainures de la came.

Elle tourne avec le flasque inférieur autour de l'axe de pivotement 2 et, selon le parcours angulaire, reste en fond de gorge ou sort de celle-ci pour se trouver en appui sur la surface latérale.

Elle présente un effet ressort lui conférant une force de rappel élastique vers le fond des gorges ou des rainures.

La tige ou lame 55 bloque la remontée de l'axe 2 lorsque celle-ci se trouve enfoncée et logée dans l'une ou l'autre des gorges ou rainures. Elle libère cet axe en déplacement vers le haut lorsqu'elle sort de ladite gorge par son soulèvement consécutif au passage du coin arrondi adjacent.

Dans le mode de réalisation représenté sur les figures 5 à 9, le ressort est du type à tige ou à lame réalisée, par exemple, en acier clinquant, dont, pour des raisons de simplicité de construction, l'une des extrémités 56 est immobilisée dans le flasque inférieur du bras et dont l'autre extrémité est libre à travers une fenêtre 57. L'aspect bombé résulte de la pression de contact du coin arrondi adjacent entre deux gorges consécutives, qui vient le comprimer sur une partie de sa longueur contre son extrémité fixe par un travail de compression en porte-à-faux.

Bien entendu, d'autres formes et types de ressorts peuvent convenir.

Lorsque le bras pivote dans une zone angulaire au-delà d'une déviation angulaire prédéterminée, fonction du nombre, de la longueur et de la disposition des gorges ou rainures, la tige du ressort, après le passage du coin adjacent, sort de la gorge, libérant mécaniquement l'axe de pivotement dans sa montée, sous l'effet du ressort de rappel, en vue du blocage de la cale sur son profilé porteur, par un mouvement angulaire supplémentaire du bras.

On remarque ici la présence de trois gorges qui procurent deux positions symétriques de réarmement et corrélativement de blocage par rapport au plan perpendiculaire médian.

Afin de mieux faire comprendre les moyens décrits et leur fonction, on décrira ci-après les différentes phases de fonctionnement de la structure pivotante selon l'invention.

Le bras se trouve à l'état initial en position rabattue contre l'élément rectiligne porteur laissant la voie libre aux véhicules portés par le plan de chargement.

Selon la commande au pied, sur la pédale 28,il s'y trouve en position verrouillée et bloquée (fig. 5). Après enfoncement de la pédale, le bras est déverrouillé (fig. 6).

Le bras tournera librement après libération de la pédale et mise en prise du ressort d'armement 54 dans une des gorges.

Le bras est alors pivoté dans le sens convenable de droite à gauche ou de gauche à droite.

A partir d'une certaine déviation angulaire, la rotation du bras va faire sortir le ressort d'armement 54 de la gorge dans laquelle il se trouve par la présentation du coin inter-gorges adjacent et passage du ressort le long de celui-ci. L'axe de pivotement 2 n'est plus maintenu dans sa position verticale basse de déverrouillage. Ceci résulte de la conformation en succession de gorges de l'axe au droit du ressort à la manière d'une came en creux avec séparation par des coins angulaires arrondis. Le ressort d'armement dans son mouvement sort de la gorge et la surface latérale du cylindre constituant la pièce d'armement 36 rapportée sur le corps de l'axe de pivotement glisse le long du ressort sous l'effet de la remontée dudit axe de pivotement.

Le ressort de rappel de l'axe de pivotement ramène celui-ci automatiquement vers le haut avec la pièce de blocage 37 qui, par le jeu du contact mécanique entre le front plan de poussée 25 de l'extrémité arrière du bras et la paroi arrière biseautée de la pièce de blocage assure la poussée de celle-ci vers la face interne 8 du profilé porteur et le contact corrélatif d'immobilisation de coincement de la garniture de son front avant sur le profilé porteur.

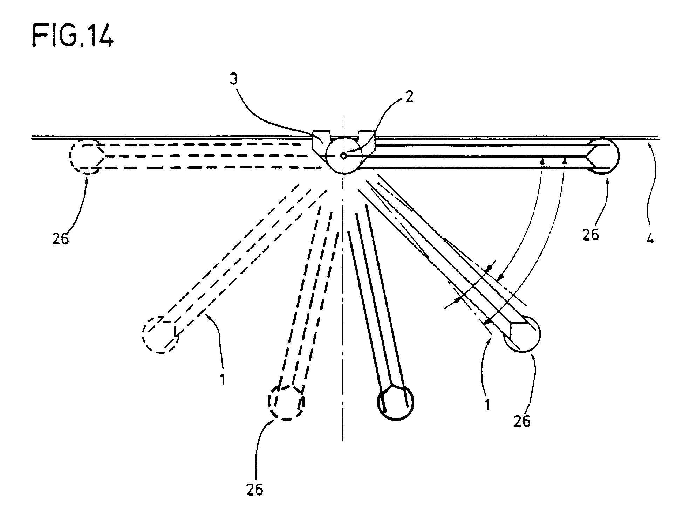

La succession de ces actions mécaniques aboutissant au blocage par coincement nécessite une certaine amplitude de déviation angulaire matérialisée sur la figure 14 par deux positions différentes du bras. La première position à angle d'ouverture situé entre 40 et 50° d'angle, dans l'exemple choisi, correspond à la zone d'armement. Une faible déviation angulaire supplémentaire dans cette zone au-delà de cette position amène le ressort en position de sortie de la gorge qui constituait son logement pour libérer l'axe de pivotement en mouvement vertical vers le haut.

Son contact linéaire avec le coin arrondi adjacent le soulève et le fait sortir de la gorge. L'axe ainsi libéré est rappelé vers le haut.

Une déviation supplémentaire aboutit à la position de blocage dans laquelle le ressort a dépassé franchement la position d'armement et se trouve à la verticale d'une gorge disposée en biais mais suffisamment peu inclinée par rapport au ressort pour qu'elle puisse le recevoir sans déviation angulaire supplémentaire.

La déviation supplémentaire permet au bras d'effectuer le blocage par appui de son front d'extrémité arrière sur la paroi arrière de la pièce de blocage. En fin de blocage il se trouve au-dessus de la gorge suivante, prêt à s'y loger par le mouvement de l'axe de pivotement consécutif à une action d'enfoncement sur la pédale (figure 8). Lorsque celle-ci se produit, il s'enfonce dans la gorge sans mouvement angulaire supplémentaire du bras.

Les positions d'armement et de blocage diffèrent entre elles d'un écart angulaire d'environ 30°.

Entre les deux positions respectives d'armement et de blocage, la succession des opérations mécaniques suivante a lieu : échappement de ressort d'armement de la gorge où il s'était logé, libération et montée de l'axe de pivotement, contact mécanique du front de poussée avec l'un des biseaux de la paroi arrière de poussée de la pièce transversale de blocage, poussée, déplacement transversal et contact de coincement du patin d'appui 41 contre la face adjacente du profilé porteur.

En raison de la symétrie des gorges de came de la pièce d'armement, ces positions d'armement et de blocage existent symétriquement par rapport à un plan perpendiculaire médian. Elles sont représentées en pointillés sur la figure 14.

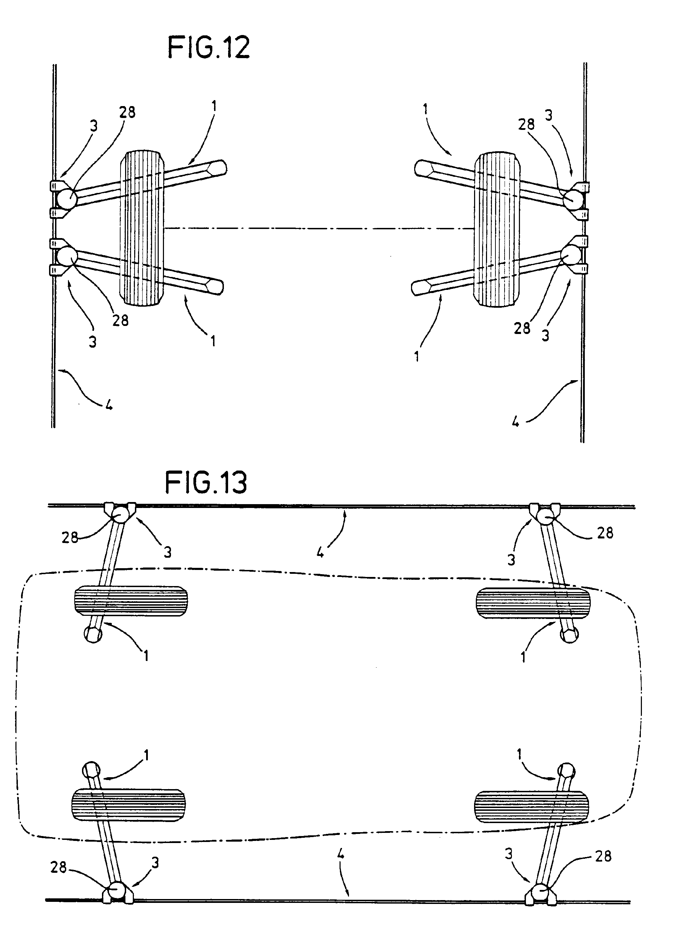

Bien entendu, cette opération peut être répétée à n'importe quel endroit le long du profilé porteur de manière à pouvoir caler aisément et rapidement un véhicule par ses quatre roues comme le montre la figure 13. Il suffit de déplacer chaque embase en position perpendiculaire neutre le long du profilé porteur jusqu'à quasi contact du bras avec le pneu et d'effectuer par une poussée du pied de l'embase le déplacement de déviation angulaire nécessaire jusqu'au blocage.

On mentionne ici un avantage important dans l'efficacité du calage. En effet, on remarque que la pression de blocage en déplacement le long du profilé porteur augmente avec l'amplitude angulaire de poussée sur le bras au-delà de la position de blocage. Ainsi, la poussée du véhicule sur sa cale augmente la force de coincement, c'est-à-dire le maintien de la cale en position, réalisant ainsi un autocoincement en sécurité positive.

On procède de façon identique pour l'application en soutien d'un véhicule, représentée sur la figure 12.

Selon cette application, deux cales sont disposées convergentes ou divergentes en position de blocage sous chaque roue de manière à soutenir et bloquer chaque roue comme des structures porteuses à pinces.

On peut également utiliser cette disposition pour effectuer le calage d'un véhicule par ses seules roues avant.

L'invention a été décrite ci-dessus en détail. Il est bien entendu cependant que diverses modifications simples, adjonctions, variantes directes, substitutions par des moyens équivalents entrent dans le cadre de la présente protection.

## Revendications

1. Structure unitaire de calage ou de soutien par les roues d'un véhicule automobile comprenant un bras pivotant (1) monté articulé à pivotement par son extrémité arrière sur un axe de pivotement vertical (2) porté par une embase (3) mobile en translation le long d'un profilé porteur (4) et susceptible d'y être immobilisée par le contact de pression sur ce profilé porteur (4) d'une pièce de blocage (39), caractérisée en ce que l'extrémité articulée du bras pivotant (1) montée pivotante sur l'axe de pivotement (2) présente, sur la surface du volume intérieur de sa pièce d'extrémité près du profilé porteur (4), une conformation de réception et de poussée sur la pièce de blocage (39) pour établir, par l'intermédiaire de cette pièce de blocage (39), un contact de pression sur la face interne du profilé porteur (4), sous l'effet de la poussée provoquée par l'extrémité articulée du bras à l'intérieur d'une zone prédéterminée de débattement angulaire, et un blocage angulaire du bras pivotant (1), et en ce que la pièce de blocage (39) est mobile axialement en translation suivant la direction de l'axe de pivotement, sous l'effet d'un dispositif d'armement-déclenchement (37) entre une position haute, dans laquelle le mouvement angulaire du bras à l'intérieur d'une zone angulaire prédéterminée permet une immobilisation conjointe en pivotement du bras (1) et en translation de son embase (3) sur le profilé porteur (4), et une position basse, dans laquelle la pièce de blocage (39) échappe à l'action de la commande en poussée et libère le bras en pivotement, l'extrémité arrière du bras et l'axe de pivotement (2) constituant, avec la pièce de blocage (39), un mécanisme de verrouillage-déverrouillage (9).

2. Structure unitaire selon la revendication 1, caractérisée en ce que la pièce de blocage (39) est montée sur l'axe de pivotement (2) et en ce que celui-ci est mobile axialement.

3. Structure unitaire de calage ou de soutien selon la revendication 2, caractérisée en ce que la pièce de blocage (39) est immobilisée axialement sur l'axe de pivotement (2) avec un débattement transversal de poussée et comporte, à son extrémité avant, un front de contact et d'immobilisation par pression sur la face en regard du profilé porteur (4).

4. Structure unitaire de calage ou de soutien selon l'une des revendications 2 ou 3, caractérisée en ce que la pièce de blocage (39) est mobile en translation axiale avec l'axe de pivotement (2) qui la porte sous l'action du dispositif d'armement-déclenchement (37) la retenant vers le bas ou la libérant en rappel élastique vers le haut lors du déclenchement.

5. Structure unitaire de calage ou de soutien selon l'une quelconque des revendications précédentes, caractérisée en ce que l'extrémité arrière du bras pivotant (1) comprend deux flasques (20) et (21) réunis mécaniquement entre eux, pourvus d'ouvertures en leur centre et portés sur l'axe de pivotement (2), les deux flasques (20) et (21) constituant une pièce d'encastrement (22) de profil transversal en forme générale de U couché, dont la face interne est conformée vers le haut selon un épaulement défini par une rampe de dégagement (24) suivie, vers l'avant et le haut, d'un front de butée-poussée verticale (25) sur la pièce de blocage (39) en vue d'obtenir une immobilisation par coincement, le front de butée-poussée verticale (25) du bras pivotant (1) étant plan et perpendiculaire à l'axe du bras pivotant.

6. Structure unitaire de calage ou de soutien selon l'une quelconque des revendications précédentes, caractérisée en ce que la pièce de blocage (39) présente une paroi arrière coopérant avec l'épaulement de la pièce d'extrémité (22) du bras en vue de son blocage par poussée contre la face adjacente du profilé porteur (4) par l'action conjointe, d'une part du dispositif d'armement-déclenchement (37) mettant l'axe en position armée et d'autre part du mécanisme de verrouillage-déverrouillage (9) commandé par le mouvement angulaire de pivotement du bras dans une zone angulaire prédéterminée.

7. Structure unitaire de calage et de soutien selon l'une des revendication 5 ou 6, caractérisée en ce que l'axe de pivotement (2) est formé d'une pièce principale (33) présentant un épaulement circulaire de rétrécissement (34) à environ mi-longueur pour se terminer par une partie cylindrique (35) de plus faible diamètre qui porte une pièce d'armement (36) rapportée en extrémité et solidaire de cet axe, l'espace technique situé entre l'épaulement (34) et le haut de la partie (35) formant un maneton sur lequel est montée, par l'intermédiaire d'une bague déplaçable déformable (38), la pièce mobile de blocage (39).

8. Structure unitaire de calage ou de soutien selon l'une des revendications 5, 6 ou 7, caractérisée en ce que la paroi arrière de la pièce de blocage (39) présente un front de poussée formé de deux biseaux (44) et (45) séparés par un méplat (46).

9. Structure de calage ou de soutien selon les revendications précédentes prises dans leur ensemble, caractérisée en ce que l'axe de pivotement (2) est monté en rappel élastique vers le haut dans la position de verrouillage du bras.

10. Structure unitaire de calage ou de soutien selon la revendication 9, caractérisée en ce que le dispositif d'armement-déclenchement (37) est une pièce de l'axe de pivotement permettant un maintien sélectif de celui-ci en position basse de pivotement dans la zone angulaire de pivotement.

11. Structure unitaire de calage ou de soutien selon la revendication 10, caractérisée en ce que le dispositif d'armement-déclenchement (37) est une came en creux (48) dans les cavités de laquelle vient se loger sélectivement une pièce d'encliquetage ou une partie de cette pièce.

12. Structure unitaire de calage ou de soutien selon la revendication 11, caractérisée en ce que la pièce d'encliquetage est un ressort d'armement (54) à lame ou à tige (55) et la came en creux (48) une pièce pourvue de plusieurs gorges ou rainures (49, 50, 51) dans un plan transversal séparées par des coins (52, 53) raccordant les gorges à la surface latérale afin d'assurer la réception de la tige et son échappement lors de la rotation de l'axe de pivotement.

13. Structure unitaire de calage ou de soutien selon la revendication 12, caractérisée en ce que la came (48) pourvue des gorges est l'axe de pivotement (2).

14. Structure unitaire de calage ou de soutien selon la revendication 1, caractérisée en ce que l'axe de pivotement (2) est terminé à son extrémité supérieure par une pédale (28) conformée en champignon pour le réarmement manuel du dispositif.

## Patentansprüche

1. Baueinheit zum Festsetzen oder Abstützen eines Kraftfahrzeugs mittels seiner Räder mit einem Schwenkarm (1), der mit seinem hinteren Ende an einer vertikalen Achse (2) schwenkbar gelagert ist, die von einem translatorisch entlang eines Tragprofils (4) verschiebbaren Sockel (3) getragen ist und durch Druckkontakt an diesem Tragprofil (4) mittels eines Blockierstücks (39) festgesetzt werden kann, dadurch gekennzeichnet, daß das an der Schwenkachse (2) schwenkbar gelagerte Ende des Schwenkarms (1) an der Innenraumfläche seines nahe dem Tragprofil (4) liegenden Endstücks eine Aufnahme- und Druckanordnung auf dem Blockierstück (39) aufweist, um durch Zwischenschaltung dieses Blockierstücks (39) einen Druckkontakt auf der Innenseite des Tragprofils (4) unter Wirkung des durch das schwenkbar gelagerte Ende des Arms innerhalb eines festgelegten Winkelbereichs der Ausfederung erzeugten Drucks sowie eine Winkelblockierung des Schwenkarms (1) herzustellen, und daß das Blockierstück (39) unter der Wirkung einer Spann-,Auslöseeeinrichtung (37) der Richtung der Drehachse folgend axial verschiebbar ist zwischen einer oberen Stellung, in der die Winkelbewegung des Arms innerhalb eines festgelegten Winkelbereichs ein gemeinsames Blockieren der Schwenkbewegung des Arms (1) und der Translationsbewegung seines Sockels (3) am Tragprofil (4) erlaubt, und einer unteren Stellung, in der das Blockierstück (39) von der Druckeinwirkung freikommt und den Arm zum Schwenken freigibt, wobei das hintere Ende des Arms und die Schwenkachse (2) mit dem Blockierstück (39) einen Verriegelungs- und Entriegelungsmechanismus (9) bilden.

2. Baueinheit nach Anspruch 1, dadurch gekennzeichnet, daß das Blockierstück (39) auf der Schwenkachse (2) angebracht und diese axial beweglich ist.

3. Baueinheit zum Festsetzen oder Abstützen nach Anspruch 2, dadurch gekennzeichnet, daß das Blockierstück (39) auf der Drehachse (2) mit einer transversalen Druck-Ausfederung axial festsetzbar ist und an seinem vorderen Ende eine Kontakt- und infolge Flächnandrucks eine Blockierstirnseite in Bezug auf das Tragprofil (4) aufweist.

4. Baueinheit zum Festsetzen oder Abstützen nach einem der Ansprüche 2 oder 3, dadurch gekennzeichnet, daß das Blockierstück (39) axial mit der Drehachse (2) verschiebbar ist, die es unter Wirkung der Spann-, Auslöseeinrichtung (37) trägt, die es in Richtung nach unten zurückhält oder es beim Auslösen in elastischer Rückführung nach oben freigibt.

5. Baueinheit zum Festsetzen oder Abstützen nach einem der vorangehenden Ansprüche, dadurch gekennzeichnet, daß das hintere Ende des Schwenkarms (1) zwei mechanisch miteinander verbundene Flansche (20, 21) aufweist, die in ihrem Zentrum mit Öffnungen versehen und von der Schwenkachse (2) getragen sind, wobei die zwei Flansche (20, 21) ein Einspannungteil (22) mit einem Querprofil in Form eines liegenden U's bilden, dessen Innenfläche oben entsprechend einer Schulter ausgebildet ist, die durch eine Auslöserampe (24) und eine dieser nach vorne und oben folgende vertikale Druckanschlagfläche (25) über dem Blokkierstück (39) definiert ist, um eine Klemmblockierung zu erreichen, wobei die vertikale Druckanschlagfläche (25) des Schwenkarms (1) eben und senkrecht zur Achse des Schwenkarms ausgebildet ist.

6. Baueinheit zum Festsetzen oder Abstützen nach einem der vorangehenden Ansprüche, dadurch gekennzeichnet, daß das Blockierstück (39) eine mit der Schulter des Endteils (22) des Arms zusammenwirkende Rückwand aufweist, um diesen durch Pressen gegen die benachbarte Fläche des Tragprofils (4) zu blockieren durch Zusammenwirken einerseits der Spann-, Auslöseeinrichtung (37), die die Achse in Spannlage bringt, andererseits des Verriegelungs- und Entriegelungsmechanismus (9), der durch die Winkel-Schenkbewegung des Arms in einem festgelegten Winkelbereich gesteuert wird.

7. Baueinheit zum Festsetzen oder Abstützen nach einem der Ansprüche 5 oder 6, dadurch gekennzeichnet, daß die Schwenkachse (2) von einem Hauptteil (33) gebildet ist, welches ungefähr auf halber Länge eine kreisförmige Schultereinschnürung (34) aufweist, um in ein zylindrisches Teil (35) geringeren Durchmessers überzugehen, welches ein am Ende der Achse aufgesetztes und mit dieser verbundenes Spannteil (36) trägt, wobei der technische Zwischenraum zwischen der Schulter (34) und dem oberen Bereich des Teils (35) einen Zapfen bildet, auf dem unter Zwischenschaltung eines beweglichen verformbaren Rings (38) das bewegliche Blockierstück (39) angeordnet ist.

8. Baueinheit zum Festsetzen oder Abstützen nach einem der Ansprüche 5,6 oder 7, dadurch gekennzeichnet, daß die Rückwand des Blockierstücks (39) eine Druckfläche aufweist, die von zwei durch eine Abflachung (46) getrennten Abschrägungen (44) gebildet ist.

9. Baueinheit zum Festsetzen oder Abstützen nach den vorangehenden Ansprüchen in ihrer Gesamtheit, dadurch gekennzeichnet, daß die Schwenkachse (2) in elastischer Rückstellung nach oben in der Verriegelung des Arms angeordnet ist.

10. Baueinheit zum Festsetzen oder Abstützen nach Anspruch 9, dadurch gekennzeichnet, daß die Spann-, Auslöseeinrichtung (37) ein Teil der Schwenkachse ist, welche ein selektives Halten derselben in der unteren Schwenkposition in dem Schwenkwinkelbereich ermöglicht.

11. Baueinheit zum Festsetzen und Abstützen nach Anspruch 10, dadurch gekennzeichnet, daß die Spann-, Auslöseeinrichtung (37) eine vertiefte Kurve (48) ist, in deren Vertiefung wahlweise eine Klinke oder ein Teil dieser Klinke einsitzt.

12. Baueinheit zum Festsetzen oder Abstützen nach Anspruch 11, dadurch gekennzeichnet, daß die Klinke eine Spannfeder (54) mit Blatt oder Stift (55) und die vertiefte Kurve (48) ein Teil ist, welches in einer transversalen Ebene mit mehreren Vertiefungen oder Nuten (49, 50, 51) versehen ist, die durch die Vertiefungen an den Seitenflächen verbindende Kanten (52, 53) getrennt sind, um die Aufnahme und die Freigabe des Stiftes während der Drehung der Schwenkachse sicherzustellen.

13. Baueinheit zum Festsetzen oder Abstützen nach Anspruch 12, dadurch gekennzeichnet, daß die mit Vertiefungen versehene Kurve (48) die Schwenkachse (2) ist.

14. Baueinheit zum Festsetzen oder Abstützen nach Anspruch 1, dadurch gekennzeichnet, daß die Schwenkachse (2) an ihrem oberen Ende von einem pilzförmigen Pedal (28) zum manuellen Rückstellen der Einrichtung begrenzt ist.

## Claims

1. Unitary structure for securing or supporting an automotive vehicle by its wheels and comprising a pivoting arm (1) mounted such that it is pivotably articulated by its rear end on a vertical pivot pin (2) carried by a seat (3) which can move in translation along a profiled carrier section (4) and which can be immobilised there by the pressure contact on this profiled carrier section (4) of a locking part (39), characterised in that the articulated end of the pivoting arm (1) which is pivotably mounted on the pivot pin (2) has, on the surface of the inner space of its end part near the profiled carrier section (4), a shaped part for accommodation on and thrust against the locking part (39) so as to establish, via this locking part (39), contact pressure against the inner face of the profiled carrier section (4) under the thrust effect brought about by the articulated end of the arm within a predetermined angular clearance area, and angular locking of the pivoting arm (1); and in that the locking part (39) is axially movable in translation in the direction of the pivot pin, under the effect of an activating-disengaging device (37) between a top position, in which the angular movement of the arm within a predetermined angular area simultaneously enables the arm (1) to be locked for pivoting and its seat (3) to be locked for translation on the profiled carrier section (4), and a bottom position in which the locking part (39) escapes from the action of the thrust control and releases the pivoting arm, the rear end of the arm and the pivot pin (2) forming a locking-unlocking mechanism (9) with the locking part (39) .

2. Unitary structure according to Claim 1, characterised in that the locking part (39) is mounted on the pivot pin (2); and in that the latter is axially moveable.

3. Unitary securing or support structure according to Claim 2, characterised in that the locking part (39) is immobilised axially on the pivot pin (2) with a transverse thrust clearance and comprises at its front end a contact and immobilisation face acting by pressure against the opposite face of the profiled carrier section (4).

4. Unitary securing or support structure according to either of Claims 2 and 3, characterised in that the locking part (39) is movable in axial translation with the pivot pin (2) which supports it under the action of the activating-disengaging device (37) holding it at the bottom or releasing it such that it returns upwards resiliently on disengagement.

5. Unitary securing or support structure according to any one of the preceding claims, characterised in that the rear end of the pivoting arm (1) comprises two flanges (20) and (21) which are mechanically connected to one another, are provided in their centres with openings, and are carried on the pivot pin (2), the two flanges (20) and (21) forming a fitting part (22) having a generally prone U-shaped transverse profile of which the inner face is shaped at the top in the manner of a shoulder defined by an undercut ramp (24) followed, at the front and the top, by a vertical abutment-thrust face (25) on the locking part (36) in order to bring about immobilisation by wedging, the vertical abutment-thrust face (25) of the pivoting arm (1) being planar and perpendicular to the axis of the pivoting arm.

6. Unitary securing or support structure according to any one of the preceding claims, characterised in that the locking part (39) has a rear wall cooperating with the shoulder of the end part (22) of the arm in order to lock it by urging it against the adjacent face of the profiled carrier section (4) by the simultaneous action, firstly, of the activating-disengagement device (37) placing the pin in the activated position and, secondly, of the locking-unlocking mechanism (9) controlled by the angular pivoting movement of the arm in a predetermined angular area.

7. Unitary securing and support structure according to either of Claims 5 and 6, characterised in that the pivot pin (2) is formed of a principal part (33) having a circular narrowing shoulder (34) at approximately mid-length and terminating in a cylindrical portion (35) having a smaller diameter and carrying an activating part (36) attached at the end and integral with this pin, the shoulder space between the shoulder (34) and the top of the part (35) forming a crankpin on which the movable locking part (39) is mounted via a deformable displaceable collar (38)

8. Unitary securing or support structure according to any one of Claims 5, 6 or 7, characterised in that the rear wall of the locking part (39) has a thrust face formed of two sloping edges (44) and (45) separated by a flat (46).

9. Securing or support structure according to the preceding claims taken in their entirety, characterised in that the pivot pin (2) is mounted such that it returns resiliently upwards into the locking position of the arm.

10. Unitary securing or support structure according to Claim 9, characterised in that the activation-disengagement device (37) is a part of the pivot pin enabling the latter to be held selectively in the bottom pivoting position in the angular pivoting area.

11. Unitary securing or support structure according to Claim 10, characterised in that the activation-disengagement device (37) is a hollow cam (48) in the cavities of which a catch part or a portion of this part is accommodated selectively.

12. Unitary securing or support structure according to Claim 11, characterised in that the catch part is an activation spring (54) with a blade or rod (55) and the hollow cam (48) is a part provided with a plurality of grooves or channels (49, 50, 51) in a transverse plane and separated by wedges (52, 53) connecting the channels to the lateral surface in order to accommodate the rod and release it when the pivot pin rotates.

13. Unitary securing or support structure according to Claim 12, characterised in that the cam (48) provided with the channels is the pivot pin (2).

14. Unitary securing or support structure according to Claim 1, characterised in that the pivot pin (2) terminates at its upper end in a mushroom-shaped pedal (28) for the manual reactivation of the device.
